# EUROPEAN PATENT SPECIFICATION

(11) **EP 0 522 349 B1**
(45) Date of publication and mention of the grant of the patent: **02.09.1998**
(21) Application number: 92110593.8
(22) Date of filing: 24.06.1992
(51) Int. Cl.: G06K 15/12, G06K 15/02

(54) **Method and apparatus for scanning a receiving medium**
Verfahren und Vorrichtung für die Abtastung eines Aufzeichnungsträgers
Méthode et appareil pour balayer un support de réception

(30) Priority: 01.07.1991 US 724060
(43) Date of publication of application: 13.01.1993
(73) Proprietor: EASTMAN KODAK COMPANY, Rochester, New York 14650-2201 (US)
(72) Inventor: Mackin, Thomas Andrew, c/o EASTMAN KODAK COMPANY, Rochester New York 14650-2201 (US); Ward, Joseph, c/o EASTMAN KODAK COMPANY, Rochester New York 14650-2201 (US); Sanger, Kurt Michael, c/o EASTMAN KODAK COMPANY, Rochester New York 14650-2201 (US)
(74) Representative: Buff, Michel

(56) References cited:
- US-A- 4 355 366
- US-A- 4 414 583
- US-A- 4 575 730
- SOVIET JOURNAL OF QUANTUM ELECTRONICS vol. 12, no. 2, February 1984, NEW YORK US pages 232-235, BAEV ET AL.: "OPTICAL RECORDING OF DATA ON PAPER USING CO2 AND YAG:ND3+ LASERS"

## Description

### Field of the Invention

The present invention relates to a method and apparatus for scanning a receiving medium, and more particularly, to such a method and apparatus for preventing artifacts in an image produced thereby. Reference is made to copending applications EP-A-0 525 382 and EP-A-0 522 348.

### State of the Prior Art

In one type of scanner apparatus, a photosensitive material is supported on a rotatable drum, and a print head carrying a light source is advanced relative to the photosensitive material by means of a lead screw. The light source is modulated in accordance with an information signal to form an image on the photosensitive material. In order to increase the output of such apparatus, multiple light sources are mounted in the print head so that a plurality of print lines can be formed in a single pass. In multi-line scanning systems, any difference of densities among lines can create very severe artifacts in the image. These artifacts can appear as repetitive patterns known as "banding".

The problem of banding can be particularly troublesome in half-tone printing where, for example, 12 mini-pixels are used to write a half-tone dot. Visible lines in the image, caused by unevenness in the densities of the lines, can come at a different section of each successive half-tone dot, and thus, cycle across the image. The visible lines can be due, for example, to a variation in the intensity of the light sources. The frequency of the visible lines in the image beats with the half-tone dot frequency. The resulting macro density variation can have a spatial frequency in the image which, unfortunately, matches the frequency at which the eye is most sensitive, that is, at about 0.5 cycle/mm. At this frequency range, the typical human eye can see a variation of density of around 0.2%. This small level of uneveness in density is very hard to control in a printer using a multi-line print head.

US-A-4 414 583 discloses a method and an apparatus for scanning a receiving medium with a scan head wherein an information signal is combined with a random modification signal to modulate a light beam with the combined signal. Thus visible lines between scan lines can be avoided.

### SUMMARY OF THE INVENTION

It is an object of the present invention to overcome the problems in the prior art discussed above and to provide an improved method and apparatus for scanning a receiving medium.

In accordance with the present invention a method as set forth in claim 1 and an apparatus as set forth in claim 5 are provided. Preferred embodiments of the invention are disclosed in the dependent claims.

The present invention can be used in scanner apparatus in which a diode laser is modulated by a drive current which is controlled in accordance with a digital information signal. Radiation from the diode laser is imaged onto a receiving medium such as a thermal print medium. In the present invention, an information signal is passed to a look-up table (LUT). The LUT is used to convert the image data to the proper output value so that the print head will mark the receiving medium with the density that corresponds to the information signal. In order to generate magnitude-limited noise in the print head, the output from a randomizer is fed into the LUT. The random noise is used to mask artifacts produced by the scanner apparatus.

A principal advantage of the present invention is that an image free of artifacts can be produced in both half-tone and continuous tone printing. A further advantage is that increased resolution can be obtained in both modes of operation. A still further advantage of the present invention is that an image free of artifacts can be produced without the need to precisely balance the output of the lasers used in the printer.

Other features and advantages will become apparent with reference to the following description of the preferred embodiment when read in light of the attached drawings.

### BRIEF DESCRIPTION OF THE DRAWINGS

FIG. 1 is a perspective view of a printer of a type which can utilize the present invention;
FIG. 2 is a schematic diagram of a circuit for use in the present invention;
FIG. 3 is a graph showing output values plotted against input values for a continuous-tone printer; and
FIG. 4 is a schematic diagram of a digital random noise generator for use in the circuit shown in FIG. 2.

### DESCRIPTION OF THE PREFERRED EMBODIMENTS

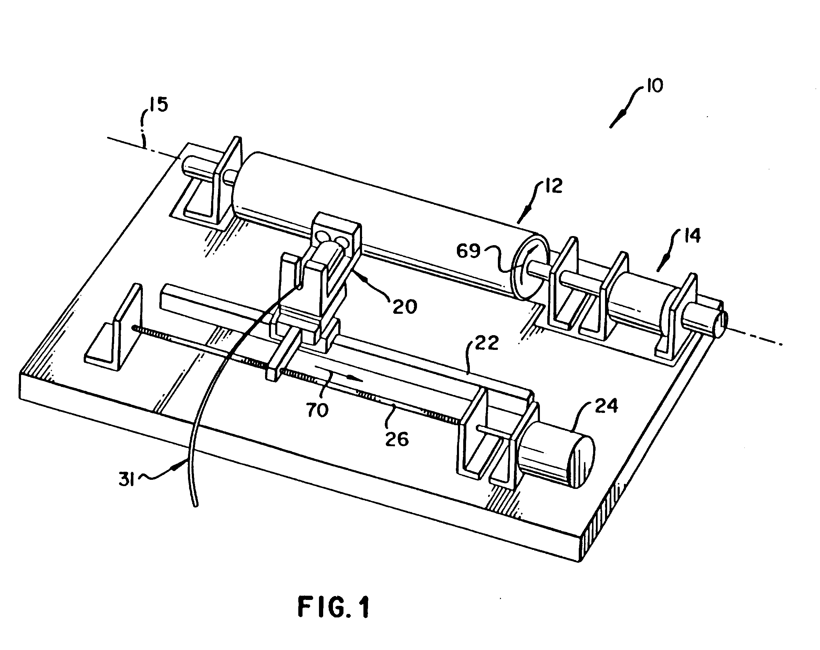

The present invention can be used in scanner apparatus such as thermal printer 10 shown in FIG. 1. Printer 10 comprises a drum 12 which is mounted for rotation about an axis 15 and is driven by a motor 14. Drum 12 is adapted to support a thermal print medium, not shown, of a type in which a dye is transferred by sublimation from a donor to a receiver as a result of heating the dye in the donor. A thermal print medium for use with the printer 10 can be, for example, a medium disclosed in U.S. Pat. No. 4,772,582, entitled "Spacer Bead Layer for Dye-Donor Element Used in Laser Induced Thermal Dye Transfer", granted September 20, 1988. This patent is assigned to the assignee of the present invention.

A scan head 20 is movably supported adjacent drum 12. Scan head 20 is supported for slidable movement on a rail 22, and the scan head 20 is driven by means of a motor 24 which rotates a lead screw 26. Scan head 20 comprises an array of optical fibers 31 which are connected to a plurality of diode lasers (not shown). The diode lasers can be individually modulated in a well known manner to selectively direct light from the optical fibers onto the thermal print medium. A more complete description of the thermal printer described herein can be found in US-A-5 164 742 (WO-A-9 108 904).

In multi-line printers, any difference in the density of the print lines creates a very severe artifact known as banding. This artifact can be due, for example, to unbalanced laser power, and the artifact is particularly troublesome in half-tone printers. In half-tone printers, it takes, for example, 12 mini-pixels to write a half-tone dot. The printing swath may sometimes be less than 12 mini-pixels, and as a result, a darker line (or several darker lines) comes at a different section of each sequential half-tone dot; these darker lines cycle across the image. The frequency of the lines of uneven density beats with the half-tone dot frequency and is visually observed in the image as banding. The resulting macro density variation can have a spatial frequency in the image which matches with the greatest contrast sensitivity of the eye.

In the present invention, random noise is injected in the laser power in order to overcome the problem of banding described above. Applicants have found that, by varying the power of the lasers randomly, the well-defined beating between the uneven densities of the half-tone dots can be broken up so that the human eye cannot perceive the density variation across the image.

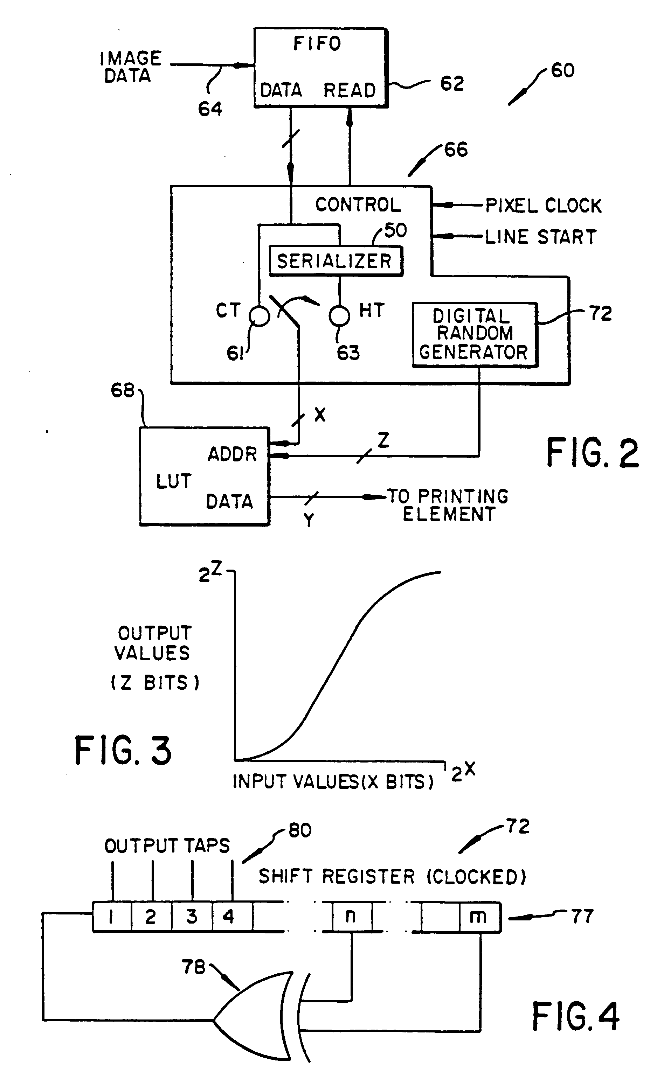

The present invention is directed to a method and apparatus for digitally injecting band-and-magnitude limited random noise into a digital output writer that has both half-tone and continuous-tone capabilities. With reference to FIG. 2, there is illustrated a circuit 60 for use in the present invention. Circuit 60 comprises a FIFO memory 62 for receiving image data indicated by arrow 64. The FIFO memory 62 can be replaced by a simple latch (not shown) if the source supplying the image information can match the output data requirements exactly. If the source cannot match the output data requirements or if the system prints multiple lines at one time as in printer 10, the FIFO memory is a requirement. Control logic 66 is adapted to access memory 62, read in the information, and pass this data to the look-up-table (LUT) 68 in accordance with timing circuits (not shown) that are driven by the pixel clock and line start signals. The data that is passed to the LUT 68 is determined by the type of printing. If continuous tone printing is being done, the data is passed through a CT terminal 61; the size of information can be, for example, 8 bits which represents the density value of one continuous-tone pixel. If half-tone printing is being done, the data is passed through a serializer 50 and an HT terminal 63 to the LUT 68, one bit at a time, each bit representing a single half-tone micropixel.

LUT 68 is used to convert the image data to the proper output value so that when the data is supplied to the print head, the printing elements will mark the receiving medium with the density that corresponds to image data value. LUT 68 is a memory device that will use the input data as the address which in turn points to the desired output value that is residing in that memory location.

In accordance with the present invention, a digital random noise generator 72 is connected to the LUT 68. Random noise generator 72 can be a so-called pseudo random noise generator as shown in FIG. 4. Random noise generator 72 comprises a shift register 77 having storage elements 1 through m, and an exclusive-OR gate 78 which receives inputs from two of the storage elements. The output of gate 78 is provided to the first storage element in register 77. The output taps 80 in generator 72 are connected to, LUT 68 as shown in FIG. 2. The number of storage elements in register 77 and the location of taps 80 determine the length of the random pattern before it repeats again. This repetition of the pattern will not degrade the effectiveness of the generator 72 as long as the pattern length is much longer than the line length of the image. Since the generator 72 changes values only when the shift register is clocked, it is easy to control the maximum frequency component in the noise spectrum being generated.

Look-up tables are particularly suitable for continuous tone printing since the relationship between input image data and the output levels needed to drive the printing element is rarely linear (see FIG. 3), and it is much easier to map the nonlinearity in this manner rather than trying to design an nonlinear output driver.

Half-tone printing is usually done with only two values being supplied to the printing element. However, if the system must be able to print in both modes, then a large look-up table will be needed for the continuous tone path and its excess can be used in the randomizing of the output data. Another advantage of using the look-up table gives is that it gives increased resolution, and this applies in both printing modes. The resolution gain is accomplished by generating more output bits than input bits (x > y in FIG. 2). The advantage can be easily seen in the half-tone mode where the data to the printing element, without the LUT, would be either 1 or 0. This would turn the printing element either fully on or fully off. If the on value (1) is passed through the LUT, then it could be expanded into as many bits as needed to give the driver adjustment capabilities (usually through a D/A Converter). The same is true for the continuous-tone mode where this technique is particularly useful on flat portions of the input/output curve (FIG. 3).

An important feature of the present invention is in how the output of the random noise generator 72 is fed into the LUT 68 to generate magnitude-limited noise to the printing element. The operation can be best described by first discussing the operation of the circuit 60, without noise, in the half-tone mode. The image data is read from the FIFO 62 and shifted out to the LUT 68 one bit at a time, and the only value this data can take is a "1" or a "0." If the data bit is a "0," the data sent to the printing element is that which resides at memory location zero in the LUT 68. The random generator 72 is added to the circuit 60 in such a manner that it is properly initialized at the start of the print and is clocked every time a new bit of image information is presented to the LUT 68. A number z of taps 80 (FIG. 4) are used to drive some of the address bits of the LUT 68. In comparison to the standard configuration where a "0" data bit pointed to LUT location zero and a "1" data bit pointed to LUT location one, now a "0" has the possibility of pointing to any of the even locations in the 2^{(z+1)} memory space and a "1" can point to any of the odd locations in the 2^{(z+1)} memory space. The nominal value for the "0" and "1" are known, and so is the percentage of randomization desired. If the LUT is initialized so that all of the odd locations are filled with the desired spread of "1" values, then the output to the printing element will be random selection of amplitude and frequency bounded information.

The following is a numeric example to illustrate the operation of the present invention. If it is assumed that the LUT has 12 bits of output data (maximum value is 4095), z = 7(bringing seven randomizing taps 80 to the LUT), the LUT has 2^{(z+1)} or 256 memory locations- half odd and half even, the nominal "0" value is 100, the nominal "1" is 3000, and +/- 10% randomization is desired. It will be understood that if randomization was not used, a "0" bit would result in a value of 100 being sent to the diode laser, and a "1" bit would result in a value of 3000 being sent to the diode laser.

For the above assumed values, it will be seen that there will be 128 "0" and 128 "1" values to be loaded into the LUT. The generation of the LUT values is done in the following manner. Ten percent of the "0" value 100 is 10, giving a range of numbers between 90 and 110. These values must be linearly distributed among the 128 "0" (even) locations that are in the LUT. The values 90 through 99 and 102 through 110 will be loaded into 6 LUT locations each, and the values 100 and 101 will be loaded into 7 LUT locations.

Ten percent of the "1" value 3000 is 300, giving a range of numbers between 2700 and 3300. These values must be linearly distributed among the 128 "1" (odd) locations that are in the LUT. For these values, the range (2700 - 3300 or 601 values) is much larger than the number of LUT locations; thus, each value will go into the LUT only once, and not all values in the range will be covered. There will be a delta of 4 or 5 counts between successive entries to the LUT. The values that are entered can be a linear representation of the range to be covered. In this case, the average of all the values in the spread will equal the nominal value.

During system operation, any time a "0" is sent to the LUT, the 7 randomizer taps will cause the selection of one of the 128 values between 90 and 110, and any time a "1" is sent to the LUT, one of the 128 values between 2700 and 3300 will be selected at random.

Randomization in the continuous tone system follows the same principles as described above for the half-tone. The one major difference is that in continuous tone the data shifted out to the LUT is larger than one bit (x in FIG. 2), with eight bits being the norm. For this system, the randomizer bits must be above the address space required by the image data, and the randomized spread of data for each nominal value will be located at addresses where the lower x bits are the same.

## Claims

1. A method for scanning a receiving medium with a scan head, said scan head comprising a plurality of light sources for directing light to the medium, said method comprising the steps of:
providing a relative movement between said medium and said scan head;
providing an information signal to a look-up table, said look-up table being arranged to provide a drive signal in response to said information signal;
combining said information signal and a random modification signal in said look-up table to form a modified drive signal; and
providing said modified drive signal to said light sources to activate said light sources selectively during the scanning of an image on said receiving medium.

2. A method, as defined in claim 1, wherein said light sources are diode lasers.

3. A method of scanning, as defined in claim 2, wherein said random modification signal is provided by a random noise generator.

4. A method of scanning, as defined in claim 3, wherein said random noise generator comprises a shift register and an exclusive-OR gate.

5. Apparatus for scanning a receiving medium with a scan head, said scan head comprising a plurality of light sources for directing light to the medium, said apparatus comprising:
drive means (14,24) for providing relative movement between said medium and said scan head in response to a command signal;
means (62) for providing a modulated information signal to a look-up table ;
means (72) for injecting a random modification signal into said look-up table, said injecting means including a random noise generator;
said look-up table being arranged to provide a drive signal to said scan head in response to said information signal and said random modification signal.

6. Apparatus, as defined in claim 5, wherein said scan head includes at least one source of laser radiation which is modulated in accordance with said information signal, and said injecting means includes means for injecting random noise into said information signal.

7. Apparatus, as defined in claim 6, wherein random noise is provided to said look-up table in order to vary the density of a micropixel in a half-tone print.

8. Apparatus, as defined in claim 7, wherein random noise is provided to said look-up table in order to vary the density in a continuous-tone print.

9. Apparatus as defined in claim 5 wherein said receiving medium is a thermal medium, and wherein, said scan head being adapted to receive light from a plurality of lasers and to project light from each of said lasers onto said thermal medium whereby a plurality of print lines can be traced on said medium during said relative movement, each of said lasers being controllable in accordance with said drive signal.

## Patentansprüche

1. Verfahren zum Abtasten eines empfangenden Mediums mit einem Abtastkopf, der eine Vielzahl von Lichtquellen umfaßt, um Licht auf das Medium zu richten, wobei das Verfahren folgende Schritte umfaßt:
Vorsehen einer relativen Bewegung zwischen dem Medium und dem Abtastkopf;
Bereitstellen eines Informationssignals an eine Look-up-Tabelle, wobei die Look-up-Tabelle so ausgeführt ist, daß sie ein Treibersignal in Abhängigkeit vom Informationssignal liefert;
Kombinieren des Informationssignals und eines Zufalls-Modifikationssignals in der Look-up-Tabelle zur Erzeugung eines modifizierten Treibersignals; und
Bereitstellen des modifizierten Treibersignals an die Lichtquellen, um die Lichtquellen während des Abtastens eines Bildes auf dem empfangenden Medium selektiv zu aktivieren.

2. Verfahren nach Anspruch 1, wobei die Lichtquellen Diodenlaser sind.

3. Verfahren zum Abtasten nach Anspruch 2, wobei das Zufalls-Modifikationsssignal durch einen Zufallsrauschgenerator geliefert wird.

4. Verfahren zum Abtasten nach Anspruch 3, wobei der Zufallsrauschgenerator ein Schieberegister und ein Exklusiv-ODER-Gatter umfaßt.

5. Vorrichtung zum Abtasten eines empfangenden Mediums mit einem Abtastkopf, der eine Vielzahl von Lichtquellen umfaßt, um Licht auf das Medium zu richten, wobei umfaßt:
Antriebseinrichtungen (14, 24) zum Ausführen einer relativen Bewegung zwischen dem Medium und dem Abtastkopf in Abhängigkeit von einem Steuersignal; Einrichtungen (62) zum Bereitstellen eines modulierten Informationssignals an eine Look-up-Tabelle;
Einrichtungen (72) zum Eingeben eines Zufalls-Modifikationssignals in die Look-up-Tabelle; wobei die
Eingabeeinrichtungen einen Zufallsrauschgenerator umfaßt und wobei die Look-up-Tabelle so aufgebaut ist, daß sie ein Treibersignal in Abhängigkeit vom Informationssignal und vom Zufalls-Modifikationssignal zum Abtastkopf liefert.

6. Vorrichtung nach Anspruch 5, wobei der Abtastkopf mindestens eine Laserstrahlungsquelle umfaßt, welche entsprechend dem Informationssignal moduliert ist, und wobei die Eingabeeinrichtungen Mittel zum Einführen von Zufallsrauschen in das Informationssignal umfaßt.

7. Vorrichtung nach Anspruch 6, wobei das Zufallsrauschen an die Look-up-Tabelle geliefert wird, um die Dichte eines Mikropixels in einem Halbtonbild zu variieren.

8. Vorrichtung nach Anspruch 7, wobei das Zufallsrauschen an die Look-up-Tabelle geliefert wird, um die Dichte in einem Grauwertbild zu variieren.

9. Vorrichtung nach Anspruch 5, wobei das empfangende Medium ein thermisches Medium ist, wobei der Abtastkopf Licht von einer Vielzahl von Lasern empfängt und Licht von jedem Laser auf das thermische Medium projiziert, und wobei eine Vielzahl von Druckzeilen während der relativen Bewegung auf das Medium durchlaufen werden kann und jeder Laser entsprechend dem Treibersignal steuerbar ist.

## Revendications

1. Procédé pour balayer un support de réception avec une tête de balayage, ladite tête de balayage comprenant une source de lumière pour diriger la lumière vers le support, ledit procédé comprenant les étapes suivantes :
assurer un déplacement relatif entre ledit support et ladite tête de balayage ;
délivrer des signaux d'informations à la table de consultation, ladite table de consultation étant conçue pour délivrer un signal d'attaque en réponse audit signal d'informations ;
combiner ledit signal d'informations et un signal de modification aléatoire dans ladite table de consultation afin de former un signal d'attaque modifié ; et
délivrer ledit signal d'attaque modifié auxdites sources de lumière afin d'activer sélectivement lesdites sources de lumière pendant le balayage d'une image sur ledit support récepteur.

2. Procédé selon la revendication 1, dans lequel lesdites sources de lumière sont des diodes laser.

3. Procédé de balayage selon la revendication 2, dans lequel ledit signal de modification aléatoire est délivré par un générateur de bruit aléatoire.

4. Procédé de balayage selon la revendication 3, dans lequel ledit générateur de bruit aléatoire comprend un registre à décalage et une porte OU EXCLUSIF.

5. Dispositif pour balayer un support récepteur avec une tête de balayage, ladite tête de balayage comprenant une pluralité de sources de lumière pour diriger la lumière sur le support, ledit dispositif comprenant :
un moyen d'entraînement (14, 24) pour assurer un déplacement relatif entre ledit support et ladite tête de balayage en réponse à un signal d'ordre ;
un moyen (62) pour délivrer un signal d'inforrnations modulé à une table de consultation ;
un moyen (72) pour injecter un signal de modification aléatoire dans ladite table de consultation, ledit moyen d'injection incluant un générateur de bruit aléatoire; ladite table de consultation étant conçue pour délivrer un signal d'attaque à ladite tête de balayage en réponse audit signal d'informations et audit signal de modification aléatoire.

6. Dispositif selon la revendication 5, dans lequel ladite tête de balayage comprend au moins une source de rayonnement laser modulée en conformité avec ledit signal d'informations et ledit moyen d'injection comprend un moyen pour injecter du bruit aléatoire dans ledit signal d'informations.

7. Dispositif selon la revendication 6, dans lequel le bruit aléatoire est délivré à ladite table de consultation afin de varier la densité d'un micropixel dans une impression de type trame.

8. Dispositif selon la revendication 7, dans lequel le bruit aléatoire est délivré à ladite table de consultation afin de faire varier la densité dans une impression de type à dégradé de tons en continu.

9. Dispositif selon la revendication 5, dans lequel ledit support de réception est un support thermique, et dans lequel,
ladite tête de balayage est conçue pour recevoir la lumière à partir d'une pluralité de lasers et pour projeter la lumière provenant de chacun desdits lasers sur ledit support thermique, d'où il résulte qu'une pluralité de lignes d'impression peuvent être tracées sur ledit support pendant ledit mouvement, chacun desdits lasers étant commandable en conformité avec ledit signal d'attaque.
